(19) Europäisches Patentamt
European Patent Office
Office européen des brevets

(11) Publication number: **0 085 213**
**B1**

(12) # EUROPEAN PATENT SPECIFICATION

(45) Date of publication of patent specification: **07.02.90**

(51) Int. Cl.[5]: **C 01 B 17/04**

(21) Application number: **82300530.1**

(22) Date of filing: **02.02.82**

(54) **Catalyst and process for oxidizing hydrogen sulfide.**

(43) Date of publication of application:
**10.08.83 Bulletin 83/32**

(45) Publication of the grant of the patent:
**07.02.90 Bulletin 90/06**

(84) Designated Contracting States:
**BE DE FR GB IT NL**

(56) References cited:

| | |
|---|---|
| FR-A-1 070 681 | US-A-3 907 919 |
| FR-A-2 032 465 | US-A-4 012 486 |
| FR-A-2 376 686 | US-A-4 019 880 |
| GB-A- 319 396 | US-A-4 061 724 |
| US-A-3 702 886 | US-A-4 092 404 |
| US-A-3 709 979 | US-A-4 243 647 |

**CHEMICAL ABSTRACTS, vol. 87, no. 8, 22nd August 1977, page 385, no. 58873z, Columbus, Ohio, USA**

**The file contains technical information submitted after the application was filed and not included in this specification**

(73) Proprietor: **UNION OIL COMPANY OF CALIFORNIA**
**461 South Boylston Street**
**Los Angeles, CA 90017 (US)**

(72) Inventor: **Ward, John William**
**19002 Gordon Lane**
**Yorba Linda California (US)**
Inventor: **Hass, Robert Henry**
**3507 Sunnywood Drive**
**Fullerton California (US)**

(74) Representative: **Baillie, Iain Cameron et al**
**c/o Ladas & Parry Isartorplatz 5**
**D-8000 München 2 (DE)**

**EP 0 085 213 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a catalyst and a process for oxidizing $H_2S$, and particularly to a process for catalytically oxidizing $H_2S$ to sulfur, $SO_2$, or both optionally in the presence of a substantial proportion of water vapor.

Current air pollution regulations are very restrictive concerning the amount of $H_2S$ that may be discharged to the atmosphere. In some instances, gas streams may not be discharged to the atmosphere if they contain more than about 10 ppmv of $H_2S$. Thus, many processes have been developed to remove $H_2S$ from gas streams prior to their discharge to the atmosphere.

One method known in the art for removing $H_2S$ involves catalytic oxidation, that is, a gas stream containing $H_2S$ is blended with air or free oxygen, and the resulting mixture is then passed through a bed of catalyst particles under appropriate conditions such that the $H_2S$ is conversed to elemental sulfur vapor or $SO_2$, or both, as desired. One catalyst useful for the gas phase conversion of $H_2S$ to sulfur or $SO_2$ is disclosed in U.S. Patent 4,092,404; it comprises one or more vanadium oxides or sulfides supported on a refractory oxide such as alumina or silica-alumina. Another such catalyst is disclosed in U.S. Patent No. 4,012,486, wherein a catalyst having active components consisting of bismuth is used to catalytically incinerate $H_2S$ to $SO_2$. According to GB 341725 $SO_2$ as well as other oxidizable sulfur compounds can efficiently be oxidized to $SO_3$ in the presence of vanadates of tin or bismuth.

When compared, the bismuth catalyst of U.S. Patent No. 4,012,486 will generally be found to be less active than the vanadia catalyst of U.S. Patent No. 4,092,404 for oxidizing $H_2S$ to $SO_2$. On the other hand, a bismuth catalyst is much more stable than a vanadia catalyst at operating temperatures below 600°F. (316°C.) when $H_2S$ must be removed from a gas stream, such as an off-gas derived from a geothermal power plant, which contains water vapor at a water vapor partial pressure above 1.0 psia (0.07 atm), usually at least 4.0 psia (0.27 atm). In general, vanadia catalysts have satisfactory stability in the presence of water vapor at partial pressures below about 1.0 psia (0.07 atm) or at operating temperatures above about 600°F. (316°C.), but under the combined conditions of temperature below 600°F. (316°C.) and water vapor partial pressures above about 1.0 psia (0.07 atm), and particularly at 1.5 psia (0.1 atm) or above, vanadia catalysts deactivate rapidly. It is believed that the reason for this deactivation is due to a complex series of chemical reactions involving the conversion of the vanadium oxide or sulfide active catalytic components to less active forms of vanadium, such as vanadyl sulfate ($VOSO_4$).

Such stability considerations with regard to water vapor and temperature have not been raised in GB 341 725, the latter disclosure dealing with $SO_3$ as an end product rather than with elemental supfur or $SO_2$.

As stated above, vanadia catalysts are highly active for the oxidation of $H_2S$ and, as disclosed in U.S. Patent 4,243,647, such catalysts have proven most useful for oxidizing $H_2S$ to sulfur by reaction with either oxygen or $SO_2$. In the presence of less than about 1.0 psia (0.07 atm) water vapor, vanadia catalysts have proven to be remarkably stable, providing high conversions of $H_2S$ to sulfur for a time period of more than 1 year with little if any deactivation being noticed. Despite the remarkable properties of vanadia catalysts, however, it is an object of the present invention not only to improve the stability of vanadium-containing catalysts in the presence of water vapor but to substantially improve their activity for converting $H_2S$ to sulfur. More specifically with respect to water vapor, it is an object of the invention to provide a process for catalytically oxidizing $H_2S$ in the presence of water vapor at a partial pressure of more than about 1.0 psia (0.07 atm), particularly above about 1.5 psia (0.10 atm), and more particularly still, above about 2.0 psia (0.14 atm). It is yet another object of the invention to achieve the foregoing without oxidizing such components as $H_2$, CO, $NH_3$, and $CH_4$ that might be present during the oxidiation of the $H_2S$. Other objects and advantages will become apparent from the following description of the invention.

It has now been found that catalysts comprising bismuth and vanadium components are highly active and stable for the gas phase oxidation of hydrogen sulfide, especially in the presence of water vapor. Such catalysts combine the high activity of vanadia catalysts with the stability of bismuth catalysts. In additon, it has been found that the catalyst of the invention is usually substantially more stable in the presence of water vapor than catalysts comprising bismuth or vanadium alone, especially at operating temperatures below about 600°F. (316°C.). Accordingly, the present invention provides for a process for oxidizing $H_2S$ by contact of a gas containing $H_2S$ with a solid catalyst in the presence of an oxidizing atmosphere at a temperature between 250° and 900°F. (121° to 482°C.), characterized in that said catalyst comprises vanadium and bismuth components, said oxidizing atmosphere contains oxygen or $SO_2$, or both, and said $H_2S$ is oxidized to elemental sulfur in the gas phase. The present invention further provides a process for catalytically incinerating $H_2S$ to $SO_2$ in a reaction zone by reaction with oxygen, and wherein said incinerating comprises contacting in said reaction zone said $H_2S$ and said oxygen at between 250° and 600°F. (121° to 316°C.), in the presence of water vapor at a partial pressure of at least about 1.0 psia (0.07 atm), with a catalyst comprising vanadium and bismuth as essential active components. The present invention further provides for a process for catalytically incinerating $H_2S$ to $SO_2$ in a reaction zone by reaction with oxygen, wherein said incinerating comprises contacting in said reaction zone said $H_2S$ and oxygen supplied in an amount in excess of that required for the conversion of said $H_2S$ to $SO_2$ at a temperature maintained between 250° and 900°F. (121° to 482°C.) with said catalyst comprising vanadium and bismuth active catalytic components on a carrier material, said vanadium and bismuth components each being present in a proportion above 5 percent by weight, calculated as $V_2O_5$ and $Bi_2O_3$ respectively,

under conditions converting $H_2S$ to $SO_2$ without the formation of essentially any $SO_3$. The present invention also provides for a catalyst composition comprising supported vanadium and bismuth components catalytically active for oxidizing $H_2S$ in the gas phase, characterized by said catalyst comprising about 8 to about 20 weight percent bismuth components, calculated as $Bi_2O_3$, and at least about 7 weight percent vanadium components, calculated as $V_2O_5$.

The catalyst of the invention is useful when $H_2S$ must be oxidized in the gas phase in the presence of water vapor at a partial pressure of more than about 1.0 psia (0.07 atm). Because $H_2S$ produces an equivalent volume of water vapor for each volume of $H_2S$ converted to sulfur or $SO_2$, it will be understood that the invention is useful in a process wherein the water vapor partial pressure in the feed gas is less than about 1.0 psia (0.07 atm) initially but, during contact with the catalyst, increases above 1.0 psia (0.07 atm).

In particular, GB—A—319 396 discloses a process for purifying gases containing $H_2S$ by oxidizing the $H_2S$ to $SO_2$ and $SO_3$ by contacting the gas in the presence of air with a catalyst. The catalyst is disclosed as comprising nickel, iron, cobalt or copper, or their compounds, and up to about 10 percent bismuth, optionally in combination with a mixed catalyst comprising nickel, cobalt, iron, copper and the like and one or more metals from groups IV, V and VI of the periodic table, such as vanadium. The process is carried out at from 100°C. to 700°C., preferably from 200°C. to 400°C. and at pressures from one atmosphere to 1000 atmospheres. A major problem with the process is, however, that the catalyst rapidly degrades, so that the operating temperature must be increased about 5°C. every three days to maintain catalytic activity. In addition, the process produces about 10 percent $SO_3$, which reacts vigorously to form sulfuric acid and is a powerful oxidizing agent.

A further advantage in the invention resides in the highly selective nature of the catalyst. Components selected from the group consisting of $H_2$, CO, $NH_3$, and those saturated hydrocarbon gases containing no more than 6 carbon atoms (i.e., light hydrocarbons) are not oxidized in the process of the invention. Additionally, the oxidation of $H_2S$, if performed at a temperature less than about 900°F. (482°C.), produces essentially no $SO_3$.

In addition to the foregoing, and perhaps most remarkable of all, vanadium-bismuth catalysts have been found to provide higher activity than comparable vanadia catalysts for the conversion of $H_2S$ to sulfur. This discovery came as a distinct surprise, for vanadia catalysts are themselves highely active for the conversion of $H_2S$ to sulfur. But comparable vanadium-bismuth catalysts prove not only to be more active than vanadia catalysts but substantially more so. For example, as will be shown hereinafter in Example VI, where prior art vanadia catalysts consisting essentially of about 10 wt.% vanadium pentoxide on silica-alumina are known to be active for lighting off the reaction between $H_2S$ and oxygen to produce sulfur at a temperature of about 375°F. (191°C.), vanadium-bismuth catalysts having the same support but comprising 8.7 wt.% vanadium components and 12.9 wt.% bismuth components prove active for lighting off the conversion of $H_2S$ to sulfur at temperatures below 300°F. (149°C.).

All references herein to catalysts containing vanadium and bismuth or to catalysts containing vanadium and bismuth components include within their meaning catalysts active for oxidizing $H_2S$ containing (1) elemental vanadium and elemental bismuth, (2) elemental vanadium and one or more bismuth compounds, (3) elemental bismuth and one or more vanadium compounds, (4) one or more vanadium compounds and one or more bismuth compounds, (5) one or more compounds of bismuth and vanadium (e.g., a bismuth vanadate), or (6) a combination of any of the foregoing.

Active catalysts for use in the invention comprise vanadium and bismuth as the essential active components. The essential active compounds may be present as the elements V and Bi, or as a mixture of individual vanadium and bismuth components (for example, $Bi_2S_3$ admixed with $V_2S_5$), or as a compound of both bismuth and vanadium, such as $Bi(VO_3)_3$ or $BiVO_4$. Alternatively, the catalyst may contain any combination of elements and compounds of vanadium and bismuth as the essential active components. Preferred catalysts contain at least one vanadium oxide or sulfide (e.g., $V_2O_5$, $V_2O_3$, $V_2S_5$, and $V_2S_3$) and at least one bismuth oxide or sulfide (e.g., BiO, $Bi_2O_3$, $Bi_2O_5$, $Bi_2S_3$, and $Bi_2O_4$). The most highly preferred catalyst contains at least some bismuth vanadate (i.e., as the orthovanadate, $BiVO_4$ or $Bi_2O_3V_2O_5$, metavanadate, $Bi(VO_3)_3$, or pyrovanadate $Bi_4(V_2O_7)_3$).

The typical catalyst contains vanadium and bismuth components in an intimate mixture, and although the catalyst may consist essentially of such a mixture, it is highly preferred that the vanadium and bismuth components be composited, as by impregnation or comulling, with carrier material. The carrier (or support) material usually comprises a porous refractory oxide, including, for example, such preferred refractory oxides as alumina-silica, zirconia, titania, , magnesia, silica-alumina, silica-zirconia, silica-titania, silica-magnesia, silica-zirconia-titania, and combinations thereof. Suitable refractory oxides include acidic metal phosphates and arsenates, such as aluminium phosphate, boron phosphate, aluminum arsenate, chromium phosphate, etc. Other suitable supports include the hydrophobic, crystalline silicas, such as the silicalites taught in U.S. Patent No. 4,061,724. (As used herein, the term "hydrophobic" refers to an absorbing capacity of no more than about 0.5 $cm^3/g$ of water). Also suitable are the amorphous and crystalline aluminosilicate zeolites, whether naturally-occurring or synthetically made. The most useful crystalline aluminosilicate zeolites are ion-exchanged so as to remove essentially all ion-exchangeable alkali or alkaline earth components. Of particular usefulness are the crystalline aluminosilicate zeolites which are hydrophobic and essentially free of alkali and alkaline earth components. Illustrative of such zeolites are the ZSM-5 zeolite disclosed in U.S. Patent No. 3,702,886, the ZSM-11 zeolite disclosed in U.S.

Patent No. 3,709,979, and the several hydrophobic zeolites disclosed in U.S. Patent No. 4,019,880. Such zeolites are characterized in high ratios of silica-to-alumina. Mixtures of any of the foregoing materials are also useful as carrier (or support) materials.

The most highly preferred refractory oxide carrier is silica-alumina when the alumina is present in a proportion of at least 10 weight percent, preferably between about 20 and 30 weight percent. Catalysts prepared from such supports are usually more active for oxidizing $H_2S$ than are catalysts prepared from most other refractory oxides. In addition, such supports are highly resistant to sulfation, that is, in the presence of $SO_3$ and/or $SO_2$ plus $O_2$, such supports are resistant to the formation of aluminum sulfate and the consequent loss of surface area, crushing strength, and activity. In general, it can be expected that catalysts prepared from silica-alumina supports containing at least 10 weight percent alumina will experience little if any deactivation due to sulfation under the conditions of the process hereinafter described.

There are several methods known in the art by which the vanadium and bismuth components may be composited with a refractory oxide support. One such method involves impregnation, that is, a suitable support, such as pellets or extrudates of 75% $SiO_2$—25% $Al_2O_3$ silica-alumina, is contacted with a solution of ammonium vanadate (or other soluble vanadium compound), dried at an elevated temperature (usually about 230°F. (110°C.)), and then contacted with a solution of a bismuth salt, such as an acidic solution of a bismuth nitrate or chloride. The composite may also be prepared by any of a variety of comulling techniques. A typical procedure involves mulling silica-alumina with solid ammonium metavanadate, solid bismuth nitrate, and sufficient water to create a paste suitable for extrusion through a die. More preferably, either or both of the vanadium and bismuth salts may be added to the mulling mixture in solution form. In a preferred embodiment, a mixture of silica-alumina, a solution of bismuth nitrate in dilute nitric acid, and an aqueous solution of ammonium metavanadate are comulled. Alternatively, a silica-alumina or other refractory oxide is comulled, for example, with an ammonium metavanadate solution, then dried or calcined at an elevated temperature, and then comulled with an aqueous solution of a bismuth salt, such as a solution of bismuth nitrate in dilute nitric acid. Comulling may also be accomplished by mixing silica-alumina with one or more bismuth vanadates in the presence of water. Alternatively still, the composite may be prepared by a combination of impregnation and comulling techniques, as by impregnating silica-alumina with ammonium vanadate, calcining, and then comulling with an acidic solution of bismuth nitrate and chloride.

After a composite is prepared by one of the foregoing impregnation and/or comulling methods or their equivalents, the composite is calcined, usually at a temperature between about 700° and about 1600° F. (371° to 871°C.), preferably 900°—1200°F. (482°—649°C.). Calcination produces a catalyst containing vanadium and bismuth largely in the form of the oxides thereof, but usually the 700°—1600°F. (371°—871°C.) calcination also produces sufficient bismuth vanadate, usually in the form of monoclinic bismuth orthovanadate ($BiVO_4$), to be detected by X-ray diffraction analysis. Bismuth orthovanadate and other bismuth vanadates are usually produced even when impregnation or comulling is accomplished without the deliberate addition of a bismuth vanadate. For example, when silica-alumina is comulled (as in Example 1 hereinafter) with ammonium metavanadate, then further comulled with an acidic solution of bismuth nitrate, extruded, cut into particulate form, and then calcined at 900°—1000°F (482—593°C), the final product contains sufficient bismuth orthovanadate to be detected by X-ray diffraction analysis.

Although the invention is not to be so limited, it is believed that catalysts containing bismuth vanadate are more active and more stable than catalysts containing no bismuth vanadate. Such is especially believed to be the case with respect to bismuth orthovanadate ($BiVO_4$). It is also believed that the reason the catalyst usually demonstrates higher stability in the presence of water vapor than is the case for catalysts containing only vanadium components or only bismuth components is due to the presence of bismuth vanadate. Hence, catalysts containing a bismuth vanadate, and particularly bismuth orthovanadate, are preferred in the invention.

Finished catalysts herein should contain at least 5.0 weight percent of vanadium and 5.0 weight percent of bismuth, calculated as $V_2O_5$ and $Bi_2O_3$, respectively. It has been found that catalysts containing less than 5.0 weight percent of either metal, while more active or stable than catalysts containing either vanadium components or bismuth components alone, are somewhat less active and less stable than catalysts containing at least 5.0 weight percent of each component. Preferably, the catalyst contains between 5 and 15 weight percent of each components, but it may, if desired, contain up to 40 weight percent of each component. A highly preferred catalyst contains at least 7 weight percent vanadium and more preferably between 7 to 15 weight percent vanadium as $V_2O_5$ and between 8 and 20 weight percent bismuth as $Bi_2O_3$, with the most highly preferred catalyst containing at least 8.0 weight percent vanadium components as $V_2O_5$ and at least 10 weight percent bismuth components as $Bi_2O_3$. (All calculations herein with respect to the proportions of active metal components on the catalyst are reported as the weight percent of vanadium and bismuth as $V_2O_5$ and $Bi_2O_3$, respectively. Thus, a catalyst particle weighing 5 grams and containing elemental vanadium, elemental bismuth, bismuth sulfide ($Bi_2S_3$), vanadium sulfide ($V_2S_5$), and bismuth orthovanadate ($BiVO_4$), each in a weight of 0.1 grams, contains vanadium components in a proportion of 5.52 weight percent as $V_2O_5$ and bismuth components in a proportion of 5.48 weight percent as $Bi_2O_3$.)

The following two Examples demonstrate preferrred procedures for preparing catalysts useful in the invention.

Example I

Four hundred twenty-one grams of 75% $SiO_2$—25% $Al_2O_3$ silica-alumina, commercially sold by the Davison Chemical Division of W. R. Grace & Co. as high alumina cracking catalyst, were placed in a steel muller, to which was added 44.2 grams of ammonium metavanadate ($NH_4VO_3$) and 6 grams of powdered methylated cellulose. The mixture was mulled for 45 minutes. A solution was then prepared by dissolving 88.8 grams of bismuth nitrate ($Bi(NO_3)_35H_2O$) in a liquid consisting of 200 cc. water and 32 cc. concentrated nitric acid. The solution was added to the previously mulled mixture, and mulling was continued for 15 minutes. An extrudable paste was then formed by mulling with 71 cc. of water for 15 minutes. The resulting paste was then extruded through a $\frac{1}{8}$ inch (0.32 cm.) diameter die and cut into particles having lengths between about $\frac{1}{8}$ and $\frac{1}{2}$ inch (0.32 to 1.27 cm). The extrudates were then allowed to dry overnight at 230°F. (110°C.). The extrudates were then calcined in the presence of air at 932°F. (500°C.) for 2 hours. The resulting catalyst contained 9.1 weight percent vanadium components (as $V_2O_5$) and 11.2 weight percent bismuth components as $Bi_2O_3$. The catalyst contained an X-ray detectable proportion of bismuth orthovanadate.

Example II

Sufficient ammonium metavanadate ($NH_4VO_3$) was mulled with the high alumina silica-alumina described in the preceding Example so that, after extrusion and cutting into $\frac{1}{8}$ inch (0.32 cm) diameter by $\frac{1}{16}$—$\frac{1}{2}$ inch (0.16—1.27 cm.) cylindrical extrudates and calcination at a temperature of about 932°F. (500°C.) for 2 hours in air, the resulting product contained 10 weight percent vanadium components as $V_2O_5$. One hundred grams of such product were then contacted with a solution prepared by dissolving 35 grams of bismuth nitrate ($Bi(NO_3)_3 \cdot 5H_2O$) in a mixture of 100 cc. water and 15 cc. concentrated nitric acid to which was added sufficient water to provide a solution of 120 cc. volume. The solution was allowed to contact the extrudate material for two hours to insure full impregnation. The extrudate material was then filtered, dried overnight at 230°F. (110°C.), and calcined at 932°F. (500°C.) for two hours in the presence of air. The resulting catalyst contained an X-ray detectable proportion of bismuth orthovanadate and further contained 8.63 weight percent vanadium components as $V_2O_5$ and 11.6 weight percent bismuth components as $Bi_2O_3$.

Catalysts prepared by the foregoing methods or their obvious equivalents have been found to be highly active for the gas phase oxidation of $H_2S$ to either $SO_2$, sulfur, or some percentage combination of both, as desired. In addition, such catalysts are highly selective throughout the temperature range of 250°—900°F. (121°—482°C.), oxidizing $H_2S$ without forming essentially any $SO_3$ and without oxidizing any $H_2$, CO, $NH_3$, or light hydrocarbons which may also be present with the $H_2S$. Of particular importance is the fact that the catalyst is remarkably stable in the presence of water vapor. The life of the catalyst for oxidizing $H_2S$ at temperatures below about 600°F (316°C.) in the presence of water vapor at a partial pressure of more than about 1.0 psia (0.07 atm) is at least 90 days, usually at least one year. The catalyst is especially useful for oxidizing $H_2S$ in the presence of water vapor at a partial pressure of at least 1.5 psia (0.10 atm), preferably at least 4.0 psia (0.27 atm), and particularly at water vapor partial pressure up to about 10.0 psia (0.68 atm). Useful results have been obtained, for example, in converting $H_2S$ to elemental sulfur by reaction with oxygen at a temperature of about 380°F. (193°C.) in the presence of water vapor at a partial pressure of about 9.0 psia (0.61 atm).

The choice as to whether or not the $H_2S$ in a given gas stream is to be converted to elemental sulfur or $SO_2$ will most likely depend upon local air pollution regulations. Typically, the maximum concentration of $H_2S$ allowable for discharge to the atmosphere is about 10 ppmv while $SO_2$ may be discharged in a maximum concentration varying between about 500 ppmv and 2.0 vol.%. Hence, incineration, i.e. conversion of $H_2S$ to $SO_2$, will usually be directed to gas streams containing between about 10 ppmv and 2.0 vol.% $H_2S$, while the typical gas stream treated for conversion to elemental sulfur will contain about 500 ppmv $H_2S$, usually 500 ppmv to 10.0 vol.% $H_2S$, preferably 50 ppmv to 5.0 vol.% $H_2S$, and most preferably 500 ppmv to 2.0 vol.% $H_2S$.

Normally, the gas streams treated in the process of the invention contain, in addition to $H_2S$, any of such components as $N_2$, $CO_2$, CO, $H_2$, $SO_2$, $O_2$, Ar, $NH_3$, $H_2O$, and light hydrocarbons. Typical gas streams for treatment herein include such $H_2S$-containing gas streams as sour natural gases, off-gases derived from geothermal stream, and high temperature, gasified coal or gasified residual oil. The gas stream may also contain, either in the presence or absence of $H_2S$, such sulfur-containing components as COS, $CS_2$, and light mercaptans (i.e., saturated mercaptans containing no more than six carbon atoms). If such sulfur-containing components are present, it is preferred that the gas stream be pretreated by the process disclosed in U.S. Patent No. 3,752,877, herein incorporated by reference. According to this process, $CS_2$, COS, and light mercaptans, along with $SO_2$ if present, are simultaneously converted at elevated temperatures (e.g., 300° to 1200°F. (149° to 649°C.), but usually 300° to 900°F. (149° to 482°C.)) to $H_2S$ by reaction with $H_2$ and/or water vapor in the presence of a catalyst comprising one or more active catalytic components of Co, Mo, Fe, W, Ni, with combinations of Co with Mo or Ni with Mo being most preferred. The pretreated gas stream will then contain $H_2S$ as essentially the only gaseous sulfur component and may be treated by a process described herein so that the $H_2S$ may be converted to $SO_2$ and/or elemental sulfur as desired.

A gas stream especially suited to the foregoing pretreated method is a Claus tail gas. Other gas streams which are preferably pretreated prior to contact with the catalyst of the invention are those containing olefins or aromatics. Olefins deactivate the catalyst herein by forming gums that deposit on the catalyst surfaces, and aromatics such as benzene, when present in significant proportions, e.g., 100 ppmv, deactivate the catalyst when the operating temperature is below about 350°F. (177°C.). Both types of deactivation, however, are only temporary, the olefin deactivation being overcome by high temperature oxidation of the gum-containing catalyst and the aromatic deactivation by raising the operating temperature above 350°F. (177°C.). Alternatively and more preferably, gas streams containing aromatic or olefin components are pretreated so as to remove these deleterious components prior to contact with the catalyst of the invention. One such pretreatment method, particularly suitable for gas streams containing olefins, is catalytic hydrogenation under the conditions and with the catalyst hereinbefore specified for gas streams containing $SO_2$, $CS_2$, COS, and light mercaptans.

Gas streams to be treated by incineration should either contain sufficient oxygen or be blended with sufficient oxygen or air so as to provide at least the stoichiometric proportion required for:

$$2H_2S + 3O_2 \rightarrow 2SO_2 + 2H_2O. \qquad (I)$$

More preferably, oxygen is present in a proportion in excess of stoichiometric, usually in a proportion between about 1.1. and 2.5 times the stoichiometric proportion. Other conditions usually employed in incinerating $H_2S$ in an adiabatic or isothermal reactor include (a) operating pressures between about 5 and 500 psia (0.34 to 34 atm), with pressures of 15—75 psia (1.02—5.10 atm) being preferred, (b) inlet operating temperature in the range of 250°—900°F. (121°—482°C.), with temperatures below about 600°F. (316°C.) and especially below about 450°F. (232°C.) being preferred, and (c) space velocities between 100 and 50,000 v/v/hr, with 500—5000 v/v/hr being preferred. Operating conditions are appropriately adjusted so that at least 90% of the $H_2S$ is incinerated to $SO_2$. Preferably, the operating conditions are adjusted so that essentially all the $H_2S$ is incinerated. Conditions known to produce essentially full conversion of $H_2S$ to $SO_2$ include: 450°F. (232°C.), 50 psia (3.4 atm), 2000 v/v/hr (gas volume calculated at 60°F (15.6°C.)), 2.2 times the stoichiometric proportion of air, and 2700 ppmv $H_2S$ in the feed gas.

The following Example III demonstrates the suitability of these conditions.

Example III

A feed gas stream having a composition shown in Table I was blended at a rate of 460 scc/min (gas volume measured at 60°F) (15.6°C.) with water vapor fed at a rate of 40 scc/min and air fed at the rate of 19.8 scc/min. The resultant gas mixture, having a water vapor content of 7.7 vol.% and an oxygen content of about 0.80 vol.% (2.23 times stoichiometric) was then passed for 15 days at a pressure of 50 psig, a constant temperature of 450°F. (232°C.), and a space velocity of about 2000 v/v/hr through an isothermal catalytic reactor containing 15 cc. of catalyst particles comprising 11.6 weight percent bismuth components (as $Bi_2O_3$) and 8.6 weight percent vanadium components (as $V_2O_5$). The catalyst was prepared as described in Example II, and the water partial pressure within the reactor was about 5.0 psia (34 kPa). The product gas was analyzed on the 15th day by appropriate mass spectrometric techniques, and the results are reports on an anhydrous basis in Table I. As shown, the $H_2S$ was completely converted to $SO_2$, and no $H_2$ or methane was oxidized. The $SO_3$ content of the effluent gas was determined to be from 3 to 5.0 ppm.

TABLE I

| | Feed Composition | Product Composition |
|---|---|---|
| Hydrogen | 873 ppmv | 838 ppmv |
| Methane | 1.68 vol.% | 1.60 vol.% |
| Nitrogen | 0 ppmv | 2.77 vol.% |
| Oxygen | 0 ppmv | 0.43 vol.% |
| Argon | 3 ppmv | 365 ppmv |
| Carbon Dioxide | 97.96 vol.% | 94.85 vol.% |
| Hydrogen Sulfide | 2727 ppmv | 0 ppmv |
| Methyl Mercaptan | 2 ppmv | 0 ppmv |
| Carbonyl Sulfide | 4 ppmv | 0 ppmv |
| Sulfur Dioxide | 36 ppmv | 2212 ppmv |
| Carbon Disulfide | 0 ppmv | 0 ppmv |
| Total Sulfur Compounds as $SO_2$[1] | 2759 ppmv | 2212 ppmv |

1. Note: The reason a lower concentration of total sulfur compounds was found in the product gas than in the feed was due to dilution by the blend of air oxidant and also by the fact that on the 15th day of operation the $H_2S$ concentration in the feed was somewhat lower than shown in Table I.

Example IV

Six differently prepared catalysts were tested under the conditions of Example III to determine how active and stable they were for incinerating $H_2S$ in the presence of 50 psia (345 kPa) water vapor pressure. The six catalysts were prepared as follows:

10 weight percent $V_2O_5$ on silica-alumina

A mixture of ammonium vanadate and the high alumina cracking catalyst described in Example I were mulled in the presence of sufficient water to create a paste suitable for extrusion. The paste was extruded through a $\frac{1}{8}$ inch (0.32 cm) die, cut into pieces about $\frac{1}{16}$—$\frac{1}{2}$ inch (0.16—1.27 cm) in length, dried at 230°F. (110°C.), and calcined in air at 932°F. (500°C.) for two hours. The catalyst consisted of 10 weight percent vanadium components (calculated as $V_2O_5$) and silica-alumina (75% silica-25% alumina).

36.6 weight percent $V_2O_5$ on silica-alumina

One hundred and eight grams of ammonium meta-vanadate, 291 grams of the high alumina silica-alumina described in Example 1, and 7.74 grams of methylated cellulose were mulled in the presence of sufficient water to produce an extrudable paste. The paste was then extruded and cut into $\frac{1}{8}$ inch (0.32 cm) diameter by $\frac{1}{16}$—$\frac{1}{2}$ inch (0.16—1.27 cm) long cylindrical pieces. The extrudates were dried overnight at 230°F. (110°C.) and calcined at 932°F. (500°C.) for two hours in the presence of air. The catalyst so produced contained 36.6 weight percent vanadium components (calculated as $V_2O_5$) on silica-alumina (75% $SiO_2$—25% $Al_2O_3$).

10.2 weight percent $Bi_2O_3$ on alumina

This catalyst was prepared according to a method similar to that taught in Example I of U.S. Patent No. 4,012,486. The procedure utilized was as follows: 17 gm $BiCl_2$ was dissolved in 40 cc. water to which was added 40 cc. concentrated hydrochloric acid. The solution was then diluted with 100 cc. water. The solution so produced was allowed to contact 100 grams of gamma alumina $\frac{1}{16}$ inch (0.16 cm.) diameter extrudates for two hours. The excess liquid was then decanted off, and the impregnated extrudates were washed with a solution consisting of 30% concentrated $NH_4OH$ and 70% water until the extrudates were chloride free. The extrudates were then washed with 500 cc. water and calcined for 2 hours at 932°F. (500°C.). The catalyst contained 10.2% bismuth components (calculated as $Bi_2O_3$) supported on gamma alumina.

4.5 weight percent $Bi_2O_3$—9.4 weight percent $V_2O_5$ on silica alumina

This catalyst was prepared by first preparing the 10 weight percent $V_2O_5$ on silica-alumina catalyst as described above. One hundred grams of this catalyst was contacted with a solution prepared by first dissolving 11.6 gm bismuth nitrate in 100 cc. water to which was added 5 cc. concentrated nitric acid, and then further adding sufficient water to make the solution up to 120 cc. The contacting time was 2 hours, after which the excess liquid was decanted off. The impregnated extrudates were then dried at 230°F. (110°C.) overnight and calcined for 2 hours at 932°F. (500°C.) in the presence of air. The finished catalyst contained 4.5 weight percent bismuth components (calculated as $Bi_2O_3$) and 9.4 weight percent vanadium components (calculated as ($V_2O_5$)). By X-ray diffraction analysis, it was determined that the finished catalyst contained bismuth orthovanadate.

7.95 weight percent $Bi_2O_3$—9.0 weight percent $V_2O_5$ on silica alumina

This catalyst was prepared according to the method shown above for the 4.5 weight percent $Bi_2O_3$—9.4 weight percent $V_2O_5$ catalyst except that the impregnating solution was prepared as follows: 23.2 gm bismuth nitrate were dissolved in 100 cc. of water plus 10 cc. nitric acid. The solution was then sufficiently diluted with water to provide a total volume of 120 cc. The finished catalyst contained 7.95 weight percent of bismuth components (as $Bi_2O_3$) and 9.0 weight percent vanadium components (as $V_2O_5$). The catalyst was found by X-ray diffraction analysis to contain bismuth orthovanadate.

11.6 weight percent $Bi_2O_3$—8.63 weight percent $V_2O_5$ on silica-alumina

This catalyst was prepared according to the method shown in Example II

Each of the foregoing catalysts was utilized to incinerate $H_2S$ to $SO_3$ under the conditions recited in Example III. The only condition which was varied for the individual catalysts was operating temperature. After operating with the various catalysts for several days duration at temperatures varying between about 450° and 510° F. (232° to 266°C.), the stability of each catalyst was determined by comparing the concentration of unreacted $H_2S$ in a sample of the product gas at a specified operating temperature early on the run versus the concentration of unreacted $H_2S$ in a sample of the product gas produced at the same specified temperature later in the run. The data so obtained are tabulated in Table II, and the stabilities of the various catalysts, in terms of the increase of unreacted $H_2S$ in the product gas per day, are also tabulated in Table II. As shown, the catalysts which proved most stable were those consisting of bismuth components or bismuth and vanadium components as the essential active catalytic components. Catalysts containing only vanadium components as the essential active catalytic components deactivated at unacceptably high rates. The most stable catalysts were those containing bismuth and vanadium components in proportions of at least about 8.0 weight percent and 7.0 weight percent, respectively. Such catalysts proved remarkably more stable than the 10% or 36.6% $V_2O_5$ catalyst and roughly twice as stable as the 10.2% $Bi_2O_3$ catalyst.

Also significant is the fact that the two catalysts containing at least about 8.0 weight percent bismuth components and at least about 7.0 weight percent vanadium components maintained an $H_2S$ concentration in the product below about 3.5 ppmv in comparison to about 6 ppmv for the vanadium-bismuth catalyst containing only 4.5 weight percent bismuth. Many environmental regulations permit no more than about 10 ppmv of $H_2S$ to be discharged to the atmosphere, and it can be seen that the two vanadium-bismuth catalysts containing at least about 8.0 weight percent bismuth components provide activity and stability that will insure against reaching such high levels of $H_2S$ in the product gas whereas the 4.5 weight percent bismuth-9.4 weight percent vanadium catalyst is less suitable for this purpose. Of special note is the high stability of the 11.6 weight percent bismuth-8.63 weight percent vanadium catalyst. Because of the high stability and high activity of this catalyst, it and other catalysts containing at least 10 weight percent bismuth components, calculated as $Bi_2O_3$, and at least 8.0 weight percent vanadium components, calculated as $V_2O_5$, are most highly preferred in the invention.

TABLE II

| Catalyst | ppmv $H_2S$ in Product at Time, $t_1$ | ppmv $H_2S$ in Product at Time, $t_2$ | Operating Temperature | | $t_2$-$t_1$ Days | Deactivation Rate[1] ppmv $H_2S$/day |
|---|---|---|---|---|---|---|
| | | | °F | °C | | |
| 10% $V_2O_5$ | 1.5 | 46.8 | 500 | 260 | 7.5 | 6.04 |
| 36.6% $V_2O_5$ | 1.5 | 51.5 | 450 | 232 | 16.9 | 2.96 |
| 10.2% $Bi_2O_3$ | 3.3 | 12.2 | 510 | 266 | 14.1 | 0.63 |
| 4.5% $Bi_2O_3$—9.4% $V_2O_5$ | 2.9 | 6.0 | 450 | 232 | 9.9 | 0.31 |
| 7.95% $Bi_2O_3$—9.0: $V_2O_5$ | 1.4 | 3.5 | 450 | 232 | 6.0 | 0.35 |
| 11.6% $Bi_2O_3$—8.63% $V_2O_5$ | 0.5 | 3.0 | 450 | 232 | 11.0 | 0.23 |

[1]Deactivtion Rate = (ppmv $H_2S$ in product at $t_2$ — ppmv $H_2S$ in product at $t_1$) ÷ ($t_2$—$t_1$) days.

Example V

To compare the initial activities of the catalysts of the invention with those of the prior art, data comparing the product $H_2S$ obtained at various temperatures in the runs of Example IV prior to any significant catalyst deactivation were tabulated in Table III. Also tabulated in Table III were data obtained from an experiment run under the same conditions of Example III but using a catalyst consisting of 13.0 weight percent $Bi_2O_3$ and silica-alumina (75% $SiO_2$—25% $Al_2O_3$), which catalyst was prepared by impregnating silica-alumina extrudates with a bismuth nitrate solution followed by calcination at 932°F. (500°C.) for two hours in the presence of air.

As shown in Table III, the vanadia and vanadium-bismuth catalysts had comparable activities under the conditions of the experiment, leaving almost no unreacted $H_2S$ at temperatures in the 420°—450°F. (216°—232°C.) range. On the other hand, the 10.2% and 13.0% bismuth catalysts were only useful at temperatures above about 500°F. (260°C.). At temperatures in the 490°—500°F. (254°—260°C.) range, the two bismuth catalysts both showed evidence of loss of activity, with unreacted $H_2S$ being as high as 50 ppmv. Thus, the vanadia and vanadium-bismuth containing catalysts exhibited substantially better activity for the conversion of $H_2S$ to $SO_2$ than the catalysts containing only bismuth components as the essential active catalytic components.

TABLE III

| Catalyst | Temperature °F. | (°C.) | ppmv $H_2S$ |
|---|---|---|---|
| 10% $V_2O_5$ | 445 | (230) | 4.4 |
| | 490 | (254) | 3.4 |
| | 500 | (260) | 1.5 |
| 36.6% $V_2O_5$ | 400 | (204) | 25 |
| | 410 | (210) | 17 |
| | 420 | (216) | 4.8 |
| | 440 | (227) | 1.5 |
| 10.2% $Bi_2O_3$ | 500 | (260) | 50 |
| | 510 | (266) | 11.8—13.4 |
| | 520 | (271) | 3.3—8.6 |
| | 530 | (277) | 3.6 |
| 13.0% $Bi_2O_3$ | 490 | (254) | 17.1 |
| | 500 | (260) | 1.0 |
| | 510 | (266) | 0.9 |

| Catalyst | Temperature °F. | (°C.) | ppmv $H_2S$ |
|---|---|---|---|
| 4.5% $Bi_2O_3$—9.4% $V_2O_5$ | 440—450 | (227—232) | 1.7—6.0 |
| 7.95% $Bi_2O_3$—9.0% $V_2$—$O_5$ | 450—460 | (232—238) | 1.1—3.5 |
| 11.6% $Bi_2O_3$—8.63% $V_2O_5$ | 450—470 | (232—243) | 0.3—4.5 |

The catalysts of the invention may also be utilized to oxidize $H_2S$ to elemental sulfur as well as for incineration to $SO_2$. To produce elemental sulfur, conditions are usually chosen for adiabatic or isothermal reactors from the following ranges: 250° to 900°F. (121°—482°C.) 100 to 10,000 v/v/hr, and 5 to 75 psia (0.34 to 521 atm), preferably from the following ranges: 275° to 475°F. (135° to 246°C.), 200 to 2500 v/v/hr, and 15 to 30 psia (1.02 to 2.04 atm), and most preferably: 275° to 425°F. (135° to 219°C.), 500 to 1500 v/v/hr, and 15 to 20 psia (1.02 to 1.36 atm). (It will, of course, be recognized that conditions within the ranges specified will

also prove useful, e.g., temperatures from 250°F. to 600°F. (121° to 316°C.), with conditions outside the foregoing ranges, e.g., 5 to 300 psia (0.34 to 20.4 atm), oftentimes proving suitable.) In addition, the inlet temperature is usually maintained between 250° and 475°F. (121°C. to 246°C.), but is preferably maintained below about 400°F. (204°C.), most preferably below 350°F. (177°C.), with at least some $H_2S$ being converted to elemental sulfur below such temperatures. An oxidant gas is also necessary, so oxygen, usually supplied in the form of air, is blended with the feed gas stream so as to produce sulfur vapor according to the following reaction:

$$2H_2S + O_2 \rightarrow 2S + 2H_2O \qquad \text{(II)}$$

Most preferably, the amount of air or oxygen so blended with the feed gas is such that oxygen is present in a proportion near or at the stoichiometric proportion for Reaction (II), usually between about 0.9 and 1.1 times the stoichiometric proportion. As is well-known, the highest possible conversions of $H_2S$ to sulfur are accomplished when oxygen is available in its stoichiometric proportion. Also contributing to high sulfur yields are low water vapor partial pressure and temperatures below about 475°F. (246°C.), particularly below about 450°F. (232°C.), with sulfur yields increasing with decreasing temperature and decreasing water vapor partial pressure.

It is, of course, well-known that $SO_2$ may be used in place of oxygen for the conversion of $H_2S$ to sulfur, the sulfur being formed by the following reaction:

$$2H_2S + SO_2 \rightleftarrows 3S + 2H_2O \qquad \text{(III)}$$

Thus, if $SO_2$ is present in the feed gas stream in any $H_2S$ to $SO_2$ ratio greater than 2.0, oxygen need only be added in an amount sufficient to react with the $H_2S$ not converted by Reaction (III). In other words, if the ratio of $H_2S$ to $SO_2$ is greater than 2.0 then the stoichiometric proportion of oxygen is that proportion sufficient to provide a molar or volumetric ratio of $H_2S$ to $(SO_2 + O_2)$ equal to 2.0.

For feed gases inherently containing $H_2S$ and $SO_2$ in an $H_2S$ to $SO_2$ ratio less than 2.0, the highest possible conversions to sulfur are obtained by firstly pretreating the feed so as to convert the $SO_2$ to $H_2S$, as by the method shown hereinbefore in U.S. Patent No. 3,752,877 and then blending the pretreated gas with sufficient oxygen or air to provide an $H_2S$ to $O_2$ ratio equal to 2.0. For feed gases containing $H_2S$ to $SO_2$ in a ratio equal to 2.0, no pretreatment or addition of oxygen is necessary; the catalyst may be used for the direct conversion of $H_2S$ to sulfur via Reaction (III).

In view of the foregoing, it should be apparent that when elemental sulfur is desired, $SO_2$ may be utilized as an alternative oxidant to oxygen. That is, for any gas stream containing $H_2S$, elemental sufur may be produced herein by blending either $SO_2$ or oxygen oxidant with the gas stream such that a ratio of $H_2S$ to oxidant of 2.0 is provided. However, oxygen is inherently superior to $SO_2$, not only because of its ready availability in the form of air but also due to the higher conversions to sulfur obtainable therewith. A comparison of Reactions (II) and (III) reveals that, for the same amount of $H_2S$ converted to sulfur, 50% more sulfur is formed by Reaction (III) with $SO_2$ oxidant than by Reaction (II) with $O_2$ oxidant. The formation of 50% more sulfur by Reaction (III) necessitates higher operating temperatures for Reaction (III) than for Reaction (II) if the sulfur vapor dew point is not to be exceeded. But at operating temperatures below 1000°F. (538°C.), the conversion of $H_2S$ to sulfur decreases with increasing temperature. Thus because $H_2S$ can be converted to sulfur by Reaction (II) at a lower temperature than Reaction (III) without exceeding the dew point, in inherent advantage — i.e., a higher conversion — is obtained when oxygen is used as oxidant than when $SO_2$ is utilized.

Whether oxygen or $SO_2$ is utilized as oxidant, it will be found that the catalyst of the invention is highly useful for converting $H_2S$ to elemental sulfur. The percentage conversion in any given situation, of course, will depend upon such factors as operating temperature, operating pressure, water vapor partial pressure, and choice of oxidant. But the vanadium-bismuth catalysts disclosed hereinbefore usually provide a conversion of $H_2S$ to elemental sulfur within 10%, often within 5%, of theoretical. And because of their high activity for converting $H_2S$ to sulfur, the vanadium-bismuth catalyst of the invention provides high conversions of $H_2S$ to sulfur under lower operating temperature and/or higher space velocity conditions than are required for comparable prior art catalysts, such as the vanadia catalyst disclosed in U.S. Patent 4,243,647. In addition, the catalyst of the invention is highly deactivation resistant, being useful, for example, for at least 90 days for the conversion of $H_2S$ to sulfur without exhibiting substantially any deactivation.

Employing the principles of the invention, it was found to be possible to form a particular composition of catalysts having 8 to 20 weight per cent bismuth components calculated as $Bi_2O_3$ and at least 7 weight per cent vanadium components calculated as $V_2O_5$ and which when contacted with a gas stream containing water vapor at a partial pressure between 2.5 and 5.0 psia (0.17 to 0.34 atm) and having a composition, calculated on an anhydrous basis, comprising 99% $CO_2$ and between 750 and 1200 vppm $H_2S$ to elemental sulfur under the following conditions: 300 psia (20.4 atm) total operating pressure and a space velocity of 750 v/v/hr, was catalytically active for lighting off the reaction between said $H_2S$ and oxygen to produce sulphur at temperatures below about 335°F (169°C) and remained active for at least 90 days.

The following Example demonstrates the high activity of vanadium-bismuth catalysts for oxidizing $H_2S$ to elemental sulfur.

Example VI

A catalyst was prepared containing 8.7 weight percent vanadium components, as $V_2O_5$, and 12.9 weight percent bismuth components, as $Bi_2O_3$, and the balance being a support consisting of silica-alumina having a 25% by weight alumina content. The catalyst was in particulate form, had a surface area of 239 $m^2$/gm, and a compact bulk density of 0.67 g/cc. (This catalyst was prepared in a manner very similar to that described in Example II.)

The foregoing catalyst (950 gm) was charged to an isothermal reactor and utilized to treat a feed gas containing (on an anhydrous basis) about 99% $CO_2$ and $H_2S$ in a concentration varying between about 750 ppmv and 1200 ppmv. Air was blended with the feed gas such that stoichiometric oxygen was available within a 10% tolerance to oxidize the $H_2S$ in the feed gas to sulfur. Elemental sulfur produced in the reactor was removed therefrom in the vapor form and recovered by condensation. The experiment was conducted over a time period of more than 5 months, and the data shown in Table IV were derived from analyses of samples of the feed and product gases when the operating conditions were those shown in Table IV.

It is noted with respect to the foregoing experiment that the catalyst throughout the run evinced no deactivation, except when the operating temperature fell below the sulfur vapor dew point temperature and sulfur deposited on the catalyst. Such deactivations, however, were only temporary, elevated temperatures restoring the catalyst to full activity.

As shown in the data in Table IV, the vanadium-bismuth catalyst of the invention is active for lighting off the conversion of $H_2S$ to sulfur at temperatures below 335°F. (169°C.), even below 300°F. (149°C.). This result is considered surprising for a number of reasons, not the least of which is that a comparable prior art catalyst — and one known to be highly active for the conversion of $H_2S$ to elemental sulfur, i.e., a 10% $V_2S_5$ on 75% $SiO_2$—25% $Al_2O_3$ catalyst — is active for lighting off the oxidation of $H_2S$ to sulfur in the presence of water vapor at partial pressures less than about 0.7 psia (48 kPa) only at temperatures at or above about 375°F. (191°C.). Thus, the catalyst of the invention proves to be substantially more active than comparable vanadia catalysts for the conversion of $H_2S$ to elemental sulfur, and such is yet more surprising when the fact the foregoing experiments were conducted with water vapor at partial pressures between about 2.5 and 5.0 psia (0.17 to 0.34 atm) is taken into consideration. As those skilled in the art are aware, increasing the amount of water vapor tends to increase the light-off temperature for a catalyst by increasing the amount of water vapor absorbed on the catalytic surfaces, thereby reducing the amount of absorbed $H_2S$ and $O_2$ (or $SO_2$). Yet despite the adverse condition of 3.0 psia (0.20 atm) water vapor, the catalyst of the invention still exhibited activity for lighting off the reaction of $H_2S$ with oxygen at about 285°F. (141°C.) whereas a comparable vanadia catalyst under the more favorable condition of less than 0.7 psia (0.48 atm) water vapor is useful only at temperatures at or above about 375°F. (191°C.).

Another surprising aspect of the invention as shown by the data in Table IV is the high stability of the vanadium-bismuth catalyst in the presence of water vapor. As shown by the data in Table II, vanadia catalysts deactivate rapidly in the presence of water vapor at temperatures below about 600°F. (316°C.), but the data in Table IV show that vanadium-bismuth catalysts resist such deactivation even when utilized in the presence of 2.5 to 5.0 psia (0.17 to 0.34 atm) water vapor for a time period of greater than 5 months.

In a specific embodiment of the invention particularly useful for treating feed gas streams containing between about 5 and 40 volume percent $H_2S$, especially when the feed gas stream contains water vapor at relatively high partial pressures, e.g. above about 2.0 psia (0.14 atm) and, more usually, above about 4.0 psia (0.27 atm), the feed gas stream is blended with air, preferably in a stoichiometric amount, and the resulting blended gases are passed through an adiabatic reactor containing a particulate vanadium-bismuth catalyst under conditions described hereinbefore such that a substantial proportion of the $H_2S$ is converted to elemental sulfur vapor. The product gas containing elemental sulfur is passed to a sulfur condenser or other suitable means for separating sulfur from the product gas, leaving a purified product gas containing residual $H_2S$. A portion of the purified product gas is then recycled and blended with the feed gas such that the blend of feed gas, air, and recycle gas entering the reactor contains $H_2S$ in a predetermined range, such as 3 to 6 volume percent, or below a predetermined maximum, for example, below 10 volume percent, but typically and preferably, 5 volume percent. The remaining portion of the purified product gas is treated by any of the three methods. The three methods (which are applicable to any embodiment of the invention in which the $H_2S$ content of a gas stream recovered after treatment with the vanadium-bismuth catalyst is too high for discharge to the atmosphere) are:

TABLE IV

| Sample No. | 809 | 1232 | 1520 | 1544 | 1568 | 1716 | 1764 | 2130 | 2150 | 2322 |
|---|---|---|---|---|---|---|---|---|---|---|
| Water Vapor Pressure, psia | 3 | 3 | 3 | 3 | 3 | 5 | 5 | 5 | 2.5 | 5.0 |
| atm | 0.20 | 0.20 | 0.20 | 0.20 | 0.20 | 0.34 | 0.34 | 0.34 | 0.17 | 0.34 |
| Operating Pressure, psia | 300 | 300 | 300 | 300 | 300 | 300 | 300 | 300 | 150 | 300 |
| atm | 20.4 | 20.4 | 20.4 | 20.4 | 20.4 | 20.4 | 20.4 | 20.4 | 10.2 | 20.4 |
| Operating Temperature, °F | 381 | 334 | 305 | 295 | 285 | 310 | 300 | 410 | 410 | 410 |
| °C | 194 | 168 | 152 | 146 | 141 | 154 | 149 | 210 | 210 | 210 |
| Feed $H_2S$, ppmv | 1050 | 1050 | 852 | 875 | 875 | 780 | 890 | 1132 | 1032 | 1137 |
| Product $H_2S$, ppmv | 68 | 48 | 44 | 29 | 84 | 111 | 120 | 143 | 213 | 162 |
| Product $So_2$, ppmv | 88 | 45 | 47 | 73 | 25 | 40 | 62 | 65 | 64 | 86 |
| Sulfur Yield, % | 77.7 | 83.8 | 82.3 | 81.3 | 77.4 | 75.4 | 75.7 | 77.0 | 70.4 | 68.7 |
| GHSV (at 60°F. (15.6°C.) and 1 atm) | 750 | 750 | 750 | 750 | 750 | 750 | 750 | 750 | 750 | 975 |

(1) If the $H_2S$ to $SO_2$ volumetric ratio in the purified product gas stream is about 2.0, the gas stream may be contacted with any porous refractory oxide-containing catalyst, such as alumina, under conditions of elevated temperature, e.g., 400° to 900°F. (204° to 482°C.) or 250° to 900°F. (121° to 482°C.), such that a substantial proportion of the $H_2S$ is converted by Reaction (III) to elemental sulfur, which is then recovered, as by condensation. In this embodiment of the invention, it is most preferred that a vanadium-bismuth catalyst as described hereinbefore be utilized to carry out the conversion to sulfur, such catalysts having far greater activity than typical alumina catalysts and therefore being useful for providing the same conversion of $H_2S$ to sulfur as alumina, but under the more difficult conditions of lower operating temperature and/or higher space velocity.

(2) If the $H_2S$ to $SO_2$ volumetric ratio is substantially above 2.0, or if one desires to allow for fluctuations in the $H_2S$ to $SO_2$ ratio in the purified product gas stream, the purified product gas stream is blended with sufficient air to provide a stoichiometric volumetric ratio of $H_2S/(SO_2 + O_2)$ of about 2.0, and the resulting mixed gases are then contacted with a vanadium-bismuth catalyst under conditions hereinbefore disclosed for conversion to elemental sulfur. Alternatively but less preferably, a vanadia catalyst consisting essentially of a vanadium oxide or sulfide on a porous refractory oxide support may be substituted for the vanadium-bismuth catalyst, provided the water vapor of the mixed gases in contact therewith is at a partial pressure below about 1.0 psia (0.07 atm) or the operating temperature is above about 600°F. (316°C.). Use of the vanadia catalyst provides less activity for the conversion of $H_2S$ to sulfur than is the case with vanadium-bismuth catalysts, but the lower activity may be suitable in certain instances, as when the cost of the catalyst is of special importance.

(3) If the $H_2S$ content of either the purified product gas stream or the gas streams recovered after sulfur condensation from methods (1) and (2) above is too high for discharge to the atmosphere, but such streams could be discharged to the atmosphere if the $H_2S$ were converted to $SO_2$ (due to less stringent air pollution standards for $SO_2$ than for $H_2S$), such gas streams are subjected to incineration to convert the $H_2S$ therein to $SO_2$. The incineration may be accomplished thermally at temperatures above about 1000°F. (538°C.) in the presence of excess oxygen, but it is preferred that the incineration be accomplished catalytically by contact with the vanadium-bismuth catalyst of the invention as described hereinbefore under the range of conditions for conversion to $SO_2$ also described hereinbefore. Use of the vanadium-bismuth catalyst provides a distinct advantage over thermal incineration in that the gas stream to be treated does not require as much preheating, the vanadium-bismuth catalyst being active for the conversion of $H_2S$ to $SO_2$ at temperatures substantially below 500°F. (260°C.).

**Claims**

1. A catalyst composition comprising supported vanadium and bismuth components catalytically active for oxidizing $H_2S$ in the gas phase, characterized by said catalyst comprising 8 to 22 weight percent bismuth components, calculated as $Bi_2O_3$, and at least 7 weight percent vanadium components, calculated as $V_2O_5$.

2. A catalyst according to claim 1 containing a hydrophobic crystalline silica.

3. A catalyst according to claim 1 or 2 containing a silicalite.

4. A catalyst composition according to claim 1, 2 or 3 wherein the catalyst is composed such that when contacted with a gas stream containing water vapour at a partial pressure between 2.5 and 5.0 psia (0.17 to 0.34 atm) and having a composition, calculated on an anhydrous basis, comprising 99% $CO_2$ and between 750 and 1220 vppm $H_2S$ blended with air supplied at a rate such that oxygen is present in a proportion between 0.9 and 1.1 times the stoichiometric proportion necessary for the conversion of said $H_2S$ to elemental sulphur under the following conditions: 300 psia (20.4 atm) total operating pressure and a space velocity of 750 v/v/hr, the catalyst is catalytically active for lighting off the reaction between said $H_2S$ and oxygen to produce sulphur at temperatures below about 335°F (169°C.) and said catalyst, under the foregoing conditions, remains active for at least 90 days.

5. A process employing a catalyst according to claim 1 for oxidizing $H_2S$ either to elemental sulphur in the gas phase or to $SO_2$ at a temperature between 250° and 900°F (121° to 482°C).

6. A process according to claim 5 wherein $H_2S$ is oxidized to $SO_2$ between 250° and 600°F (121° to 316°C).

7. A process according to claim 5 or 6 wherein $H_2S$ is oxidized with oxygen to $SO_2$ without formation of essentially any $SO_3$.

8. A process according to claims 5 to 7 wherein at least 90% of said $H_2S$ is converted to $SO_2$.

9. A process according to claim 6 or 7 wherein oxygen is supplied in excess of that required to convert said $H_2S$ to $SO_2$.

10. A process according to claim 5 wherein the $H_2S$ is oxidized to elemental sulphur in the gas phase and the oxidizing gas comprises free oxygen or $SO_2$.

11. A process according to claim 10 wherein the temperature is between 250° and 600°F (121° and 316°C.).

12. A process according to claim 10 wherein the temperature is between 250°F and 475°F (121°C and 232°C).

13. A process according to claim 10 wherein the temperature is between 250° and 450°F (121°C and 232°C).

14. A process according to claim 10, 11, 12 or 13 wherein the reaction is initiated at a temperature between 250°F (121°C) and 475°F (246°C).

15. A process for oxidizing $H_2S$ by contact of a gas containing $H_2S$ with a solid catalyst in the presence of an oxidizing gas said catalyst comprising vanadium and bismuth components, wherein said oxidizing gas comprises oxygen, or $SO_2$, or both, and said $H_2S$ is oxidized to elemental sulphur in the gas phase by said oxidant characterized in that the temperature of initiation is between 250°F (121°C) and 475°F (246°C), and the proportion of the reactants is near or at the stoichiometric proportion.

16. A process according to claim 14 or 15 wherein the reaction is initiated at a temperature below 400°F (204°C).

17. A process according to claim 16 wherein the reaction is initiated at a temperature below 350°F (177°C).

18. A process according to claim 17 wherein the reaction is initiated at a temperature below 300°F (149°C).

19. A process according to any of claims 10—18 wherein the oxidizing gas comprises free oxygen.

20. A process according to claim 19 wherein the oxygen is present in a proportion between 0.9 and 1.1 times the stoichiometric proportion necessary for conversion of $H_2S$ to sulphur.

21. A process according to any one of claims 10—20 for treating a feed gas stream containing $H_2S$ comprising:

(1) blending said free gas stream with air;

(2) passing the resulting blend through a reaction zone containing said catalyst under conditions wherein said $H_2S$ reacts with the oxygen contained in the air to produce elemental sulphur vapor;

(3) recovering a product gas stream from step (2); and

(4) separating the elemental sulphur from said product gas stream, thereby producing a purified product gas stream.

22. A process according to claim 21 further comprising:

(5) recycling a portion of the purified product gas stream to step (1).

23. A process according to claim 21 or 22 wherein said feed gas stream contains between 5 and 40 volume percent $H_2S$ and said portion of said purified product gas stream is recycled to step (1) at a rate sufficient to maintain and $H_2S$ concentration in said blended gas stream at a predetermined value lower than the $H_2S$ concentration of said feed gas stream.

24. A process according to any one of claims 21—23 wherein said feed gas stream is the product yielded from a process wherein a gas stream containing one or more sulphur components selected from the group consisting of $SO_2$, COS, $CS_2$ and light mercaptans is treated by simultaneously converting essentially all of said sulphur components to said $H_2S$ by contacting said feed gas stream in a pretreatment reaction zone maintained at elevated temperatures between 300°F and 1200°F (149°C and 649°C) with a catalyst comprising one or more active catalytic components selected from the group consisting of nickel, cobalt, iron, tungsten and molybdenum in the presence of hydrogen and water vapour.

25. A process according to claim 24 wherein the contacting in said pretreatment reaction zone is at a temperature below 900°F (482°C) and said catalyst in said pretreatment reaction zone comprises cobalt and molybdenum components.

26. A process according to any one of claims 21—25 wherein some residual $H_2S$ remains in said purified product gas and wherein some of said purified product of gas stream is contacted with a solid oxidation catalyst comprising a porous refractory oxide in a supplemental reaction zone maintained between 250° and 900°F (121° and 482°C) in the presence of sufficient oxygen, $SO_2$, or both wherein at least some of said residual $H_2S$ is oxidized to elemental sulphur and wherein said elemental sulphur produced by reaction of said residual $H_2S$ is recovered, thereby producing a second purified product gas stream.

27. A process according to claim 26 wherein said second purified gas stream contains a small proportion of $H_2S$ and is blended with an excess of air and then contacted with a catalyst comprising vanadium and bismuth active catalytic components on a porous refractory oxide support in a second supplemental reaction zone maintained at temperatures between 250° and 900°F (121° and 482°C) such that essentially all of said small proportion of $H_2S$ is oxidized to $SO_2$.

28. A process according to any one of claims 21—25 wherein some residual $H_2S$ remains in said purified product gas and wherein some of said purified product gas stream is contacted in the presence of excess oxygen with a solid oxidation catalyst comprising vanadium and bismuth components in an incineration reaction zone maintained between 250° and 900°F (121° and 482°C) wherein at least some of said residual $H_2S$ is oxidized to $SO_2$.

29. A process according to claim 27 wherein the process occurring in the second supplemental reaction zone is a process according to any one of claims 6—9.

30. A process according to any of claims 5—29 wherein any catalyst promoting the oxidation of $H_2S$ comprises a carrier material selected from the group consisting of hydrophobic crystalline silicas, amorphous aluminosilicate zeolites, crystalline aluminosilicates zeolites and mixtures thereof.

31. A process according to any of claims 5—29 wherein the catalysts comprise a porous refractory oxide support.

32. A process as defined in any of claims 5—31 wherein the or all catalyst(s) is/are in particulate form.

33. A process according to any of claims 5—32 wherein any catalyst containing vanadium and bismuth components contains said components selected from the group consisting of the vanadium oxides and sulphides, the bismuth oxides and sulphides and the bismuth vanadates.

34. A process according to any of claims 5—33 wheein said process is conducted over a time period of at least 90 days.

35. A process according to claim 34 wherein said process is conducted over a time period of at least 1 year.

36. A process according to any of claims 5—35 wherein any catalyst which promotes the oxidation of $H_2S$ is also in contact with one or more components selected from the group consisting of $H_2$, CO, $NH_3$ and light hydrocarbons.

37. A process according to claim 5—36 wherein water vapour is present at a partial pressure above 1.0 psia (0.07 atm).

38. A process according to claim 5—36 wherein the water vapour partial pressure is at least 1.5 psia (0.10 atm).

39. A process according to claim 5—36 wherein the water vapour partial pressure is at least 2.0 psia (0.14 atm).

40. A process according to claim 5—36 wherein the water vapour partial pressure is at least 4.0 psia (0.27 atm).

**Patentansprüche**

1. Katalysatorzusammensetzung mit auf einem Träger vorgesehenen Vanadium- und Wismutkomponenten, die zur Oxidation von $H_2S$ in der Gasphase katalytisch wirksam sind, dadurch gekennzeichnet, daß der Katalysator 8 bis 22 Gew.-% Wismutkomponenten, berechnet als $Bi_2O_3$, und mindestens 7 Gew.-% Vanadiumkomponenten, berechnet als $V_2O_5$, enthält.

2. Katalysator nach Anspruch 1, der ein hydrophobes kristallines Siliciumdioxid enthält.

3. Katalysator nach Anspruch 1 oder 2, der ein Silicat enthält.

4. Katalysatorzusammensetzung nach Anspruch 1, 2 oder 3, dadurch gekennzeichnet, daß der Katalysator so zusammengesetzt ist, daß in Berührung mit einem Gasstrom, der Wasserdampf unter einem Partialdruck zwischen 0,17 bis 0,34 atm und auf wasserfreier Basis berechnet 99% $CO_2$ und 750 bis 1220 Vol.-ppm $H_2S$ in Gemisch mit Luft in einer solchen Menge enthält, daß Sauerstoff in einem Anteil vorhanden ist, der das 0,9- bis 1,1-fache des Anteils beträgt, der stöchiometrisch zum Umsetzen des $H_2S$ zu elementarem Schwefel unter folgenden Bedingungen erforderlich ist: Gesamtbetriebsdruck 20,4 atm, Raumgeschwindigkeit 750 Vol./Vol./h, der Katalysator derart katalytisch wirksam ist, daß er die Reaktion zwischen dem $H_2S$ und Sauerstoff unter Erzeugung von Schwefel bei Temperaturen unter etwa 169°C zündet, und daß der Katalysator unter den vorgenannten Bedingungen mindestens 90 Tage lang wirksam bleibt.

5. Verfahren, in dem ein Katalysator nach Anspruch 1 zur Oxidation von $H_2S$ entweder zu elementarem Schwefel in der Gasphase oder zu $SO_2$ bei einer Temperatur von 121 bis 482°C geeignet ist.

6. Verfahren nach Anspruch 5, dadurch gekennzeichnet, daß $H_2S$ zwischen 121 und 316°C zu $SO_2$ oxidiert wird.

7. Verfahren nach Anspruch 5 oder 6, dadurch gekennzeichnet, daß $H_2S$ mit Sauerstoff ohne Bildung von $SO_3$ zu $SO_2$ oxidiert wird.

8. Verfahren nach den Ansprüchen 5 bis 7, dadurch gekennzeichnet, daß mindestens 90% des $H_2S$ in $SO_2$ umgewandelt werden.

9. Verfahren nach Anspruch 6 oder 7, dadurch gekennzeichnet, daß mehr Sauerstoff zugeführt wird, als zum Umwandeln von $H_2S$ in $SO_2$ erforderlich ist.

10. Verfahren nach Anspruch 5, dadurch gekennzeichnet, daß das $H_2S$ in elementarem Schwefel in der Gasphase umgewandelt wird und das Oxidationsgas freien Sauerstoff oder $SO_2$ enthält.

11. Verfahren nach Anspruch 10, gekennzeichnet durch eine Temperatur zwischen 121 und 316°C.

12. Verfahren nach Anspruch 10, gekennzeichnet durch eine Temperatur zwischen 121 und 266°C.

13. Verfahren nach Anspruch 10, gekennzeichnet durch eine Temperatur zwischen 121 und 232°C.

14. Verfahren nach Anspruch 10, 11, 12 oder 13, dadurch gekennzeichnet, daß die Reaktion bei einer Temperatur zwischen 121 und 246°C eingeleitet wird.

15. Verfahren zur Oxidation von $H_2S$ in Berührung mit einem $H_2S$ enthaltenden Gas und einem festen Katalysator in Gegenwart eines Oxidationsgases, wobei der Katalysator Vanadium- udn Wismutkomponenten enthält, das Oxidationsgas Sauerstoff und/oder $SO_2$ enthält und das $H_2S$ mit dem Oxidatidationsmittel zu elementarem Schwefel in der Gasphase oxidiert wird, dadurch gekennzeichnet, daß die Einleitungstemperatur 121 bis 246°C beträgt und das Verhältnis der Reaktionspartner wenigstens annähernd dem stöchiometrischen Verhältnis entspricht.

16. Verfahren nach Anspruch 14 oder 15, dadurch gekennzeichnet, daß die Reaktion bei einer Temperatur unter 204°C eingeleitet wird.

17. Verfahren nach Anspruch 16, dadurch gekennzeichnet, daß die Reaktion bei einer Temperatur unter 177°C eingeleitet wird.

18. Verfahren nach Anspruch 17, dadurch gekennzeichnet, daß die Reaktion bei einer Temperatur unter 149°C eingeleitet wird.

19. Verfahren nach einem der Ansprüche 10 bis 18, dadurch gekennzeichnet, daß das Oxidationsgas freien Sauerstoff enthält.

20. Verfahren nach Anspruch 19, dadurch gekennzeichnet, daß der Anteil des vorhandenen Sauerstoffs das 0,9- bis 1,1-fache des zur Umwandlung von $H_2S$ zu Schwefel stöchiometrisch erforderlichen Anteils beträgt.

21. Verfahren nach einem der Ansprüche 10 bis 20 zum Behandeln eines $H_2S$ enthaltenden Einsatzgasstroms, in dem

(1) der Einsatzgasstrom mit Luft gemischt wird;

(2) das so erhaltene Gemisch durch eine den Katalysator enthaltende Reaktionszone unter Bedingungen geführt wird, unter denen das $H_2S$ mit dem in der Luft enthaltenen Sauerstoff unter Bildung von elementarem Schwefel in Dampfform umgesetzt wird;

(3) von dem Schritt (2) ein Produktgasstrom gewonnen wird; und

(4) durch Abtrennen des elementaren Schwefels von dem Produktgasstrom ein gereinigter Produktgasstrom erhalten wird.

22. Verfahren nach Anspruch 21, in dem ferner

(5) ein Teil des gereinigten Produktgasstroms zu dem Schritt (1) zurückgeführt wird.

23. Verfahren nach Anspruch 21 oder 22, dadurch gekennzeichnet, daß der Einsatzgasstrom 5 bis 40 Vol.-% $H_2S$ enthält und der genannte Teil des gereinigten Produktgasstroms zu dem Schritt (1) in einer Menge zurückgeführt wird, die genügt, um die $H_2S$-Konzentration in dem gemischten Gasstrom auf einem vorherbestimmten Wert zu halten, der niedriger ist als die $H_2S$-Konzentration in dem Einsatzgasstrom.

24. Verfahren nach einem der Ansprüche 21 bis 23, dadurch gekennzeichnet, daß der Einsatzgasstrom das Produkt ist, das in einem Verfahren erhalten wird, in dem ein Gasstrom, der eine oder mehrere Schwefelkomponenten, die aus der Gruppe ausgewählt sind, die aus $SO_2$, COS, $CS_2$ und den leichten Mercaptanen besteht, derart behandelt wird, daß zum gleichzeitigen Umwandeln im wesentlichen aller der genannten Schwefelkomponenten in das $H_2S$ der Einsatzgasstrom in einer Vorbehandlungsreaktionszone, in der erhöhte Temperaturen zwischen 149 und 649°C aufrechterhalten werden, in Gegenwart von Wasserstoff und Wasserdampf mit einem Katalysator behandelt wird, der einen oder mehrere katalytisch wirksame Komponenten enthält, die aus der Gruppe ausgewählt sind, die aus Nickel, Kobalt, Eisen, Wolfram und Molybdän besteht.

25. Verfahren nach Anspruch 24, dadurch gekennzeichnet, daß das Kontaktieren in der Vorbehandlungsreaktionszone bei einer Temperatur unter 482°C erfolgt und der Katalysator in der Vorbehandlungsreaktionszone Kobalt- und Molybdänkomponenten enthält.

26. Verfahren nach einem der Ansprüche 21 bis 25, dadurch gekennzeichnet, daß in dem gereinigten Produktgas etwas restliches $H_2S$ verbleibt und daß in einer Nachreaktionszone die auf einer Temperatur zwischen 121 und 482° gehalten wird, ein Teil des gereinigten Produktgasstroms mit einem festen Oxidationskatalysator in Berührung gebracht wird, der poröses hochschmelzendes Oxid enthält, wobei Sauerstoff und/oder $SO_2$ in einer solchen Menge vorhanden sind, daß mindestens ein Teil des restlichen $H_2S$ zu elementarem Schwefel oxidiert wird, und daß durch Gewinnung des durch die Umsetzung des restlichen $H_2S$ erzeugten elementaren Schwefels ein zweiter gereinigter Produktgasstrom erhalten wird.

27. Verfahren nach Anspruch 26, dadurch gekennzeichnet, daß der zweite gereinigte Gasstrom einen kleinen Anteil $H_2S$ enthält und mit einem Überschuß von Luft vermischt und dann in einer zweiten Nachreaktionszone, in der Temperaturen zwischen 121 und 482°C aufrechterhalten werden, derart mit einem Katalysator in Berührung gebracht wird, der katalytisch wirksame Vanadium- und Wismutkomponenten auf einem porösen Träger aus einem hochschmelzenden Oxid enthält, daß der kleine Anteil von $H_2S$ im wesentlichen vollständig zu $SO_2$ oxidiert wird.

28. Verfahren nach einem der Ansprüche 21 bis 25, dadurch gekennzeichnet, daß in dem gereinigten Produktgasstrom etwas restliches $H_2S$ enthalten ist und ein Teil des gereinigten Produktgasstroms in einer Verbrennungsreaktionszone, in der eine Temperatur zwischen 121 und 482°C aufrechterhalten wird, in Gegenwart von überschüssigem Sauerstoff mit einem festen Oxidationskatalysator in Berührung gebracht wird, der Vanadium- und Wismutkomponenten enthält, wobei mindestens ein Teil des restlichen $H_2S$ zu $SO_2$ oxidiert wird.

29. Verfahren nach einem der Ansprüche 21 bis 25, dadurch gekennzeichnet, daß die zweite Nachreaktionszone ein Verfahren nach einem der Ansprüche 6 bis 9 ist.

30. Verfahren nach einem der Ansprüche 5 bis 29, dadurch gekennzeichnet, daß ein gegebenenfalls zum Fördern der Oxidation von $H_2S$ verwendeter Katalysator ein Trägermaterial enthält, das aus der Gruppe ausgewählt ist, die aus hydrophobem kristallinem Siliciumdioxid, amorphen Aluminiumsilikatzeolithen, kristallinen Aluminiumsilikatzeolithen und Gemischen derselben besteht.

31. Verfahren nach einem der Ansprüche 5 bis 29, dadurch gekennzeichnet, daß die Katalysatoren einen porösen Träger aus einem hochschmelzenden Oxid enthalten.

32. Verfahren nach einem der Ansprüche 5 bis 31, dadurch gekennzeichnet, daß der Katalysator oder die Katalysatoren in feinteiliger Form vorliegt bzw. vorliegen.

33. Verfahren nach einem der Ansprüche 5 bis 32, dadurch gekennzeichnet, daß in einem gegebenenfalls verwendeten, Vanadium- und Wismutkomponenten enthaltenden Katalysator diese Komponenten

aus der Gruppe ausgewählt sind, die aus den Vanadiumoxiden und -sulfiden, den Wismutoxiden und -sulfiden und den Wismutvanadaten besteht.

34. Verfahren nach einem der Ansprüche 5 bis 33, dadurch gekennzeichnet, daß das Verfahren mindestens 90 Tage lang durchgeführt wird.

35. Verfahren nach Anspruch 34, dadurch gekennzeichnet, daß das Verfahren mindestens ein Jahr lang durchgeführt wird.

36. Verfahren nach einem der Ansprüche 5 bis 35, dadurch gekennzeichnet, daß ein gegebenenfalls zum Fördern der Oxidation von $H_2S$ verwendeter Katalysator auch mit einer oder mehreren Komponenten in Berührung gebracht wird, die aus der Gruppe ausgewählt sind, die aus $H_2$, CO, $NH_3$ und leichten Kohlenwasserstoffen ausgewählt ist.

37. Verfahren nach Anspruch 5 bis 36, dadurch gekennzeichnet, daß Wasserdampf unter einem Partialdruck über 0,07 atm vorhanden ist.

38. Verfahren nach Anspruch 5 bis 36, dadurch gekennzeichnet, daß der Wasserdampfpartialdruck mindestens 0,10 atm beträgt.

39. Verfahren nach Anspruch 5 bis 36, dadurch gekennzeichnet, daß der Wasserdampfpartialdruck mindestens 0,14 atm beträgt.

40. Verfahren nach Anspruch 5 bis 36, dadurch gekennzeichnet, daß der Wasserdampfpartialdruck mindestens 0,27 atm beträgt.

**Revendications**

1. Composition de catalyseur comprenant des composants au vanadium et au bismuth fixés à un support, catalytiquement actifs pour oxyder $H_2S$ en phase gazeuse, ce catalyseur étant caractérisé en ce qu'il comprend 8 à 22% en poids de composants au bismuth, calculés en $Bi_2O_3$, et au moins 7% en poids de composants au vanadium, calculés en $V_2O_5$.

2. Catalyseur selon la revendication 1 contenant une silice cristalline hydrophobe.

3. Catalyseur selon la revendication 1 ou 2 contenant une silicalite.

4. Composition de catalyseur selon la revendication 1, 2 ou 3, dans laquelle le catalyseur est composé de façon à ce que, lorsqu'il est mis au contact d'un courant gazeux contenant de la vapeur d'eau à une pression partielle entre 2,5 et 5,0 psia (0,17 à 0,34 atmosphère) et ayant une composition, calculée en matières anhydrides, comprenant 99% de $CO_2$ et entre 750 et 1 220 ppm en volume d'$H_2S$ mélangé avec de l'air fourni en une quantité telle que l'oxygène soit présent en une proportion entre 0,9 et 1,1 fois la proportion stoechiométrique nécessaire à la conversion dudit $H_2S$ en soufre élémentaire dans les conditions suivantes: pression opératoire totale de 300 psia (20,4 atmosphère) et vitesse spatiale de 750 v/v/h, le catalyseur est catalytiquement actif pour arrêter la réaction entre ledit $H_2S$ et l'oxygène pour produire du soufre aux températures inférieures à environ 335°F (169°C) et ledit catalyseur, dans les conditions précédentes, demeure actif pendant au moins 90 jours.

5. Procédé utilisant un catalyseur selon la revendication 1 pour oxyder $H_2S$ soit en soufre élémentaire en phase gazeuse, soit en $SO_2$ à une température entre 250° et 900°F (121° à 482°C).

6. Procédé selon la revendication 5, dans lequel $H_2S$ est oxydé en $SO_2$ entre 250° et 600°F (121° à 316°C).

7. Procédé selon la revendication 5 ou 6, dans lequel $H_2S$ est oxydé avec de l'oxygène en $SO_2$ essentiellement sans aucune formation de $SO_3$.

8. Procédé selon les revendications 5 à 7, dans lequel au moins 90% dudit $H_2S$ sont transformés en $SO_2$.

9. Procédé selon la revendication 6 ou 7, dans lequel l'oxygène est fourni en excès de la quantité nécessaire pour transformer ledit $H_2S$ en $SO_2$.

10. Procédé selon la revendication 5, dans lequel $H_2S$ est oxydé en soufre élémentaire en phase gazeuse et le gaz oxydant comprend de l'oxygène libre ou du $SO_2$.

11. Procédé selon la revendication 10, dans lequel la température est entre 250° et 600°F (121° et 316°C).

12. Procédé selon la revendication 10, dans lequel la température est entre 250°F et 475°F (121° et 266°C).

13. Procédé selon la revendication 10, dans lequel la température est entre 250° et 450°F (121°C et 232°C).

14. Procédé selon la revendication 10, 11, 12 ou 13, dans lequel la réaction est amorcée à une température entre 250°F (121°C) et 475°F (246°C).

15. Procédé pour oxyder $H_2S$ par contact d'un gaz contenant de l'$H_2S$ avec un catalyseur solide en présence d'un gaz oxydant, ledit catalyseur comprenant des composants au vanadium et au bismuth, où ledit gaz oxydant comprend de l'oxygène ou du $SO_2$, ou les deux, et ledit $H_2S$ est oxydé en soufre élémentaire en phase gazeuse par ledit oxydant, caractérisé en ce que la température d'amorçage est entre 250°F (121°C) et 475°F (246 -C) et la proportion des corps en réaction est proche de la proportion stoechiométrique.

16. Procédé selon la revendication 14 ou 15, dans lequel la réaction est amorcée à une température inférieure à 400°F (204°C).

17. Procédé selon la revendication 16, dans lequel la réaction est amorcée à une température inférieure à 350°F (177°C).

18. Procédé selon la revendication 17, dans lequel la réaction est amorcée à une température inférieure à 300°F (149°C).

19. Procédé selon l'une quelconque des revendications 10 à 18, dans lequel le gaz oxydant comprend de l'oxygène libre.

20. Procédé selon la revendication 19, dans lequel l'oxygène est présent en une proportion entre 0,9 et 1,1 fois la proportion stoechiométrique nécessaire à la conversion d'$H_2S$ en soufre.

21. Procédé selon l'une quelconque des revendications 10 à 20 pour le traitement d'un courant de gaz d'alimentation contenant de l'$H_2S$ comprenant:

(1) le mélange dudit courant de gaz libre avec de l'air;

(2) le passage du mélange obtenu à travers une zone de réaction contenant ledit catalyseur dans des conditions telles que ledit $H_2S$ réagisse avec l'oxygène contenu dans l'air pour produire de la vapeur de soufre élémentaire;

(3) la récupération d'un courant de gaz produit du stade (2); et

(4) la séparation du soufre élémentaire dudit courant de gaz produit pour produire un courant de gaz produit purifié.

22. Procédé selon la revendication 21 comprenant de plus:

(5) le recyclage d'une portion du courant de gaz produit purifié dans le stade (1).

23. Procédé selon la revendication 21 ou 22, dans lequel ledit courant de gaz d'alimentation contient entre 5 et 40% en volume d'$H_2S$ et ladite portion dudit courant de gaz produit purifié est recyclée dans le stade (1) à un taux suffisant pour maintenir la concentration d'$H_2S$ dans ledit courant de gaz mélangé à une valeur prédéterminée inférieure à la concentration d'$H_2S$ dans ledit courant de gaz d'alimentation.

24. Procédé selon l'une quelconque des revendications 21 à 23, dans lequel ledit courant de gaz d'alimentation est le produit d'un procédé dans lequel un courant de gaz contenant ou un plusieurs composants au soufre choisis dans le groupe constitué par $SO_2$, COS, $CS_2$ et les mercaptans légers est traité par conversion simultanée de la quasi-totalité desdits composants au soufre en ledit $H_2S$ par contact dudit courant de gaz d'alimentation dans une zone de réaction de prétraitement maintenue à une température élevée entre 300°F et 1 200°F (149°C et 649°C) avec un catalyseur comprenant un ou plusieurs composants catalytiques actifs choisis dans le groupe constitué par le nickel, le cobalt, le fer, le tungstène et le molybdène en présence d'hydrogène et de vapeur d'eau.

25. Procédé selon la revendication 24, dans lequel le contact dans ladite zone de réaction de prétraitement est effectué à une température inférieure à 900°F (482°C) et ledit catalyseur dans ladite zone de réaction de prétraitement comprend des composants au cobalt et au molybdène.

26. Procédé selon l'une quelconque des revendications 21 à 25, dans lequel de l'$H_2S$ résiduel demeure dans ledit gaz produit purifié et dans lequel une partie dudit courant de gaz produit purifié est mise au contact d'un catalyseur d'oxydation solide, comprenant un oxyde réfractaire poreux, dans une zone de réaction complémentaire maintenue entre 250° et 900°F (121° et 482°C) en présence de suffisamment d'oxygène, de $SO_2$, ou des deux, dans laquelle au moins une partie dudit $H_2S$ résiduel est oxydée en soufre élémentaire et dans laquelle ledit soufre élémentaire produit par réaction dudit $H_2S$ résiduel est récupéré pour produire un second courant de gaz produit purifié.

27. Procédé selon la revendication 26, dans lequel ledit second courant de gaz purifié contient une petite proportion d'$H_2S$ et est mélangé avec un excès d'air, puis mis au contact d'un catalyseur comprenant des composants catalytiques actifs au vanadium et au bismuth sur un support d'oxyde réfractaire poreux dans une seconde zone de réaction complémentaire maintenue à des températures entre 250° et 900°F (121° et 482°C), de façon à ce que la quasi-totalité de ladite petite proportion d'$H_2S$ soit oxydée en $SO_2$.

28. Procédé selon l'une quelconque des revendications 21 à 25, dans lequel de l'$H_2S$ résiduel demeure dans ledit gaz produit purifié et dans lequel une partie dudit courant de gaz produit purifié est mise au contact, en présence d'un excès d'oxygène, d'un catalyseur d'oxydation solide comprenant des composants au vanadium et au bismuth, dans une zone de réaction d'incinération maintenue entre 250° et 900°F (121° et 482°C), dans laquelle au moins une partie dudit $H_2S$ résiduel est oxydée en $SO_2$.

29. Procédé selon la revendication 27, dans lequel le procédé réalisé dans la seconde zone de réaction complémentaire est un procédé selon l'une quelconque des revendications 6 à 9.

30. Procédé selon l'une quelconque des revendications 5 à 29, dans lequel tout catalyseur favorisant l'oxydation d'$H_2S$ comprend une matière support choisie dans le groupe constitué par les silices cristallines hydrophobes, les aluminosilicates zéolitiques amorphes, les aluminosilicates zéolitiques cristallins et leurs mélanges.

31. Procédé selon l'une quelconque des revendications 5 à 29, dans lequel les catalyseurs comprennent un support d'oxyde réfractaire poreux.

32. Procédé selon l'une quelconque des revendications 5 à 31, dans lequel le ou tous les catalyseurs est/sont en particules.

33. Procédé selon l'une quelconque des revendications 5 à 32, dans lequel tout catalyseur contenant des composants au vanadium et au bismuth contient lesdits composants choisis dans le groupe constitué par les oxydes et sulfures de vanadium, les oxydes et sulfures de bismuth et les vanadates de bismuth.

34. Procédé selon l'une quelconque des revendications 5 à 33, dans lequel ledit procédé est effectué pendant une période d'au moins 90 jours.

35. Procédé selon la revendication 34, dans lequel ledit procédé est effectué pendant une période d'au moins un an.

36. Procédé selon l'une quelconque des revendications 5 à 35, dans lequel tout catalyseur qui favorise l'oxydation d'$H_2S$ est également au contact d'un ou plusieurs composants choisis dans le groupe constitué par $H_2$, CO, $NH_3$ et les hydrocarbures légers.

37. Procédé selon les revendications 5 à 36, dans lequel la vapeur d'eau est présente à une pression partielle supérieure à 1,0 psia (0,07 atmosphère).

38. Procédé selon les revendications 5 à 36, dans lequel la pression partielle de la vapeur d'eau est d'au moins 1,5 psia (0,10 atmosphère).

39. Procédé selon les revendications 5 à 36, dans lequel la pression partielle de la vapeur d'eau est d'au moins 2,0 psia (0,14 atmosphère).

40. Procédé selon les revendications 5 à 36, dans lequel la pression partielle de la vapeur d'eau est d'au moins 4,0 psia (0,27 atmosphère).